(19) Europäisches Patentamt
European Patent Office
Office européen des brevets

(11) **EP 4 157 681 B1**

(12) **FASCICULE DE BREVET EUROPEEN**

(45) Date de publication et mention de la délivrance du brevet:
**04.03.2026 Bulletin 2026/10**

(21) Numéro de dépôt: **21725066.1**

(22) Date de dépôt: **04.05.2021**

(51) Classification Internationale des Brevets (IPC):
**B60T 8/172** *(2006.01)*    **B60T 8/1761** *(2006.01)*

(52) Classification Coopérative des Brevets (CPC):
**B60T 8/172; B60T 8/17616;** B60T 2250/04

(86) Numéro de dépôt international:
**PCT/EP2021/061736**

(87) Numéro de publication internationale:
**WO 2021/239409 (02.12.2021 Gazette 2021/48)**

(54) **PROCÉDÉ DE FREINAGE D'UNE ROUE**

RADBREMSVERFAHREN

WHEEL BRAKING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2020 FR 2005727**

(43) Date de publication de la demande:
**05.04.2023 Bulletin 2023/14**

(73) Titulaire: **Astemo France**
**93700 Drancy (FR)**

(72) Inventeurs:
• **AYACHE, Marc**
**75002 PARIS (FR)**
• **PASQUET, Thierry**
**94300 VINCENNES (FR)**
• **RAMIREZ HERNANDEZ, Carlos Eduardo**
**92130 ISSY LES MOULINEAUX (FR)**
• **AKOURTAM, Samy**
**92220 BAGNEUX (FR)**

(74) Mandataire: **LLR**
**2, rue Jean Lantier**
**75001 Paris (FR)**

(56) Documents cités:
WO-A1-2009/060093    DE-A1- 102013 221 500
DE-A1- 102017 211 656    FR-A1- 2 871 889
FR-A1- 2 906 518    US-A- 5 058 019

**Description**

L'invention se rapporte au domaine des actionneurs de freinage de véhicule et leur utilisation.

On a déjà proposé dans l'état de la technique des systèmes de freins antiblocage (ABS).

Ces systèmes visent à garantir le meilleur contrôle du véhicule et une plus grande sécurité des passagers, en empêchant les roues de bloquer pendant un épisode de freinage. En effet, quand les roues se bloquent, elles cessent de tourner, et le véhicule commence alors à glisser. Or, que ce soit sur route mouillée ou sèche, une forte application des actionneurs de freinage en l'absence d'un système ABS peut causer un blocage des roues.

Un des aspects les plus dangereux du blocage des roues est la perte de contrôle directionnel qui en résulte. Lorsque les roues cessent de tourner, le conducteur n'a plus aucun contrôle sur la trajectoire du véhicule. Le véhicule glisse et le conducteur ne peut pas modifier sa direction pour éviter tout objet vers lequel il glisse. En empêchant les roues de bloquer, le système ABS assure que le conducteur sera encore capable de diriger le véhicule après un épisode de freinage.

Le principe général des systèmes ABS est de surveiller la vitesse des roues et, si un blocage potentiel ou à venir d'une roue est détecté sur une roue, agir en appliquant et en relâchant rapidement un actionneur de freinage de cette roue.

Généralement, la détection d'un blocage à venir est obtenue en comparant la vitesse du véhicule et la vitesse de la roue surveillée. Il est donc important que la mesure et/ou le calcul de ces vitesses soit le plus précis possible afin de réaliser la meilleure comparaison et, in fine, détecter un blocage du mieux possible. Le document WO 2009 060093 A1 divulgue un exemple de procédé pour calculer la vitesse d'un véhicule. Le document FR2871889 A1 divulgue un autre exemple de procédé pour calculer la vitesse d'un véhicule.

Cependant, généralement la vitesse du véhicule est calculée à l'aide, notamment, des valeurs des vitesses des roues du véhicules.

En outre, afin d'optimiser le freinage d'une roue, il est connu de calculer un taux de glissement de celle-ci. Ce taux de glissement est également calculé à partir de la vitesse du véhicule et de la vitesse de la roue.

Or, durant la régulation ABS, le taux de glissement des roues étant en constante évolution, il devient difficile d'estimer la vitesse de référence du véhicule sur la base du signal des capteurs de vitesse des roues. Cela représente un désavantage des systèmes existants.

De plus, il est connu de commander l'actionneur de freinage d'une roue d'après une valeur de consigne ou une gamme de consigne du taux de glissement. En effet, selon des valeurs du taux de glissement connus d'expérience, le freinage peut être amélioré.

En automatique, un asservissement est un système dont l'objet principal est d'atteindre le plus rapidement possible sa valeur de consigne et de la maintenir, quelles que soient les perturbations externes. Le principe général est de comparer la consigne et l'état du système de manière à le corriger efficacement.

Ainsi, afin d'obtenir un freinage optimal, il est connu d'asservir le taux de glissement à la commande d'un actionneur de freinage.

Aux fins de la détection du blocage d'une roue à venir et de la commande d'un actionneur de roue, il existe donc un besoin de calculer le plus précisément possible la vitesse du véhicule.

De plus, généralement, le calcul de la vitesse du véhicule requiert des capteurs de vitesse de chaque roue et des capteurs d'inertie du véhicule. Le capteur d'inertie n'est généralement pas relié directement au calculateur du système ABS. Ainsi, sa prise en compte ne peut se faire que si le système électronique général fonctionne. En cas de dysfonctionnement de celui-ci, le système ABS ne peut donc fonctionner de manière autonome. Ceci représente un désavantage des systèmes existants.

L'invention a notamment pour but de remédier aux inconvénients précédemment énoncés.

A cet effet l'invention a pour objet un procédé selon la revendication 1.

Le procédé permet d'obtenir un calcul plus précis de la vitesse. En effet, on ne prend pas en compte une vitesse erronée d'une roue bloquée.

En outre, une vitesse erronée d'une roue due à un blocage de cette roue n'impacte donc pas le calcul de la vitesse du véhicule puisque cette vitesse erronée est ignorée.

De manière préférentielle, on calcule un gradient des valeurs de la vitesse d'au moins une roue à intervalle de temps régulier, et on détermine si au moins une des roues est bloquée grâce aux étapes suivantes :

- on compare la valeur absolue du gradient à un seuil prédéterminé :

  - si la valeur est supérieure alors on considère que la roue est bloquée et on déclenche un chronomètre,
  - sinon, on considère que la roue n'est pas bloquée, et après une durée prédéterminée par rapport au déclenchement du chronomètre, on considère que la roue n'est pas bloquée.

On considère qu'une roue est bloquée si la décélération de ladite roue est supérieure à un seuil prédéterminé. On raisonne donc selon la variation de la vitesse d'une roue et non pas selon sa vitesse seule. Il est donc possible de détecter le blocage d'une roue même à des vitesses élevées.

Un autre aspect de l'invention est de fournir un procédé de freinage visant à obtenir le meilleur freinage possible.

Pour ce faire, l'invention prévoit un procédé de freinage d'au moins une roue d'un véhicule dans lequel :

- on calcule un taux de glissement SR de la roue selon la formule suivante :

[Math 2]

$$SR = \frac{VS - WS}{VS}$$

où WS est la vitesse de la roue,

où VS est la vitesse du véhicule et est calculée d'après le procédé de calcul de l'invention, et

- on freine la roue au moyen d'une commande d'un actionneur de freinage,

le taux de glissement (SR) étant asservi par la commande de l'actionneur selon une valeur de consigne prédéterminée du taux de glissement (SR).

Pour garantir une distance d'arrêt minimale, le taux de glissement SR de chaque roue doit rester dans une certaine plage pour un état de surface de la route donné.

Le taux de glissement calculé bénéficie de la plus grande précision dans le calcul de la vitesse du véhicule. Ainsi, son calcul est lui aussi plus précis. L'asservissement de ce taux de glissement selon une valeur de consigne est donc de meilleure qualité puisqu'il est possible de connaitre plus précisément la valeur du paramètre à asservir.

Ainsi, on commande l'actionneur de freinage de manière plus précise et le freinage de la roue est donc amélioré.

La valeur de consigne du taux de glissement est comprise entre 15% et 50%, de préférence entre 17% à 45%, de manière encore plus préférentielle entre 18% et 42% ou la valeur de consigne est égale à 18%.

La valeur du taux de glissement détermine la commande de l'actionneur de freinage :

- si le taux de glissement est inférieur à 18%, on commande l'actionneur de freinage pour freiner la roue, et
- si le taux de glissement est supérieur à 42%, on commande l'actionneur de freinage pour stopper le freinage de la roue.

Ainsi, selon l'invention, le système ABS reconnaît le blocage naissant sur une ou plusieurs roues grâce au calcul du taux de glissement à temps pour réagir en diminuant le freinage ou, au contraire, en l'accentuant afin de maintenir optimal le taux de glissement.

L'invention permet de calculer la vitesse de référence du véhicule uniquement à partir des capteurs de vitesse des roues. Le système ABS est donc autonome à partir des retours des capteurs de vitesse et peut donc continuer à fonctionner même en cas de défaillance du système électronique général.

Le procédé de freinage selon l'invention est utilisé pour maintenir constante la vitesse du véhicule ou diminuer la vitesse du véhicule.

Enfin, selon l'invention, on prévoit un système de freinage apte à mettre en œuvre l'un des procédés de calcul d'une vitesse selon l'invention et l'un des procédés de freinage d'une roue selon l'invention, et un véhicule comprenant ce système de freinage.

## Figures

[Fig.1] La [Fig.1] est un graphique représente le coefficient de freinage d'une roue en fonction du taux de glissement de cette roue.

[Fig.2] La [Fig.2] illustre l'évolution de la vitesse d'une roue et de la vitesse du véhicule durant la régulation ABS de cette roue.

[Fig.3] La [Fig.3] illustre les étapes pour déterminer si une roue est bloquée ou non.

[Fig.4] La [Fig.4] illustre les étapes pour déterminer si la vitesse calculée du véhicule est fiable ou non.

[Fig.5] La [Fig.5] illustre les étapes de correction de la vitesse du véhicule selon un mode de réalisation de l'invention.

[Fig.6] La [Fig.6] illustre le calcul de la vitesse du véhicule à partir des vitesses des roues gauche et droite.

**Définitions**

Le système ABS est constitué d'un capteur de vitesse, actif ou passif, pour chaque roue, d'un calculateur électronique et d'un système de régulation, par exemple hydraulique, de la pression de freinage.

De plus, en termes de liaison au sol, on distingue la résistance au roulement (la roue tourne librement avec une valeur de glissement nulle), l'adhérence de roulement (la roue tourne avec une faible valeur de glissement, comprise entre 5 et 20 %) et l'adhérence de glissement (la roue tourne avec une valeur de glissement supérieure à 20 %, une valeur de 100 % signifiant que la roue cesse de tourner et glisse sur la chaussée).

Le glissement se définit comme l'écart entre la vitesse circonférentielle d'une roue et la vitesse de translation de la voiture, écart qui s'exprime indifféremment par un pourcentage ou un coefficient. Logiquement, le coefficient de glissement est toujours compris entre 0 (0 % de glissement, ce qui signifie qu'il n'y a pas de différence entre la rotation de la roue et la translation de la voiture) et 1 (100 % de glissement, ce qui signifie que, soit la roue est totalement bloquée au freinage, soit elle patine alors que la voiture reste parfaitement immobile au démarrage).

**Détermination du blocage d'une roue**

Lors d'un freinage d'urgence, si le système ABS détecte le blocage d'une roue, cela signifie que la pression de freinage est trop forte compte tenu de l'adhérence disponible et/ou qu'elle glisse.

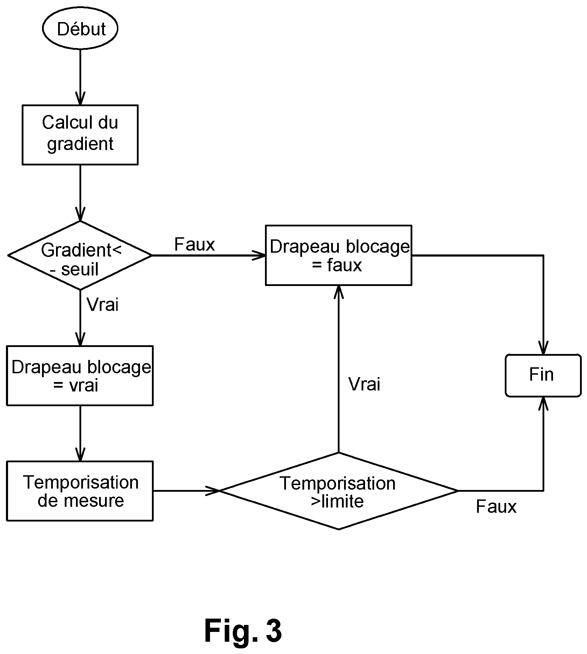

La [Fig.3] illustre comment le système ABS selon l'invention détecte le blocage d'une roue.

La vitesse de référence de la roue est surveillée en permanence à intervalle de temps régulier prédéterminé pour estimer la tendance de la pente. La durée entre deux mesures de la vitesse de référence de la roue est de l'ordre de la milliseconde. Elle peut être de 0,5 ms, 1 ms, 2 ms, 5 ms, 10 ms par exemple.

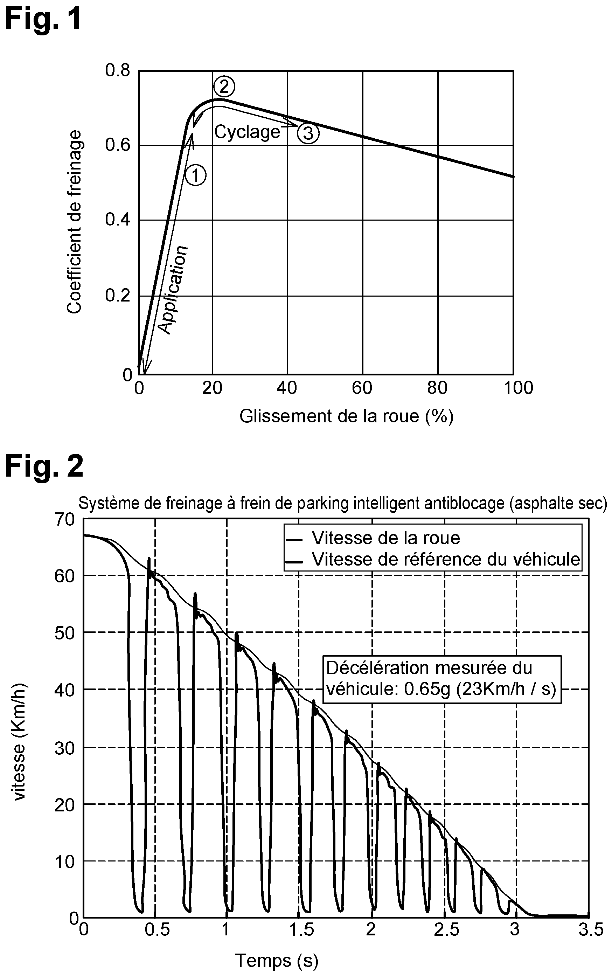

Quand la roue surveillée n'est pas bloquée, la vitesse circonférentielle de la roue est égale à la vitesse de référence du véhicule comme illustré à la [Fig.2].

Grâce aux mesures réalisées à intervalle de temps régulier, il est possible de calculer le gradient de de vitesse de la roue. Autrement dit, le calculateur de l'ABS calcule la dérivée par rapport au temps des vitesses de la roue d'après l'intervalle de temps prédéterminé. La formule de ce gradient est la suivante :

[Math.3]

$$Gradient\ vitesse\ de\ la\ roue = \frac{Vitesse\ de\ la\ roue\ (t) - Vitesse\ de\ la\ roue\ (t - \Delta t)}{\Delta t}$$

Si la roue n'est pas bloquée, ce gradient est faible car la vitesse de la roue est proche de celle du véhicule.

En cas de blocage, la vitesse de la roue, par définition, chute très vite et devient inférieure à la vitesse de référence du véhicule. Elle n'est plus représentative de celle-ci.

La valeur absolue du gradient devient alors subitement très élevée ou encore sa valeur devient subitement très faible.

C'est pourquoi, comme illustré à la [Fig.3], si la valeur absolue du gradient de la vitesse est supérieure à seuil prédéterminé ou encore si le gradient devient inférieur à une valeur prédéterminée, on considère que la roue est bloquée.

Le calculateur garde en mémoire que la roue est bloquée (*Flag Lock* = *true*) et déclenche un chronomètre.

Le chronomètre sert à réinitialiser l'algorithme. Une fois une durée prédéterminée écoulée, on considère que la roue n'est plus bloquée (*Flag Lock* = *true*) et on recalcule le gradient de la vitesse de la roue afin de vérifier si un nouveau blocage survient.

Si le gradient ne chute pas en deçà de la valeur prédéterminée, le calculateur considère que la roue n'est pas bloquée et le garde en mémoire (*Flag lock* = false). Le calcul du gradient continue afin de surveiller sa valeur.

**Fiabilité du calcul de la vitesse de référence du véhicule**

Une fois que le système ABS selon l'invention a déterminé si au moins une roue était bloquée ou pas, il est en mesure de déterminer si la vitesse du véhicule calculée est fiable ou non.

Comme expliqué ci-dessus, sauf blocage, la vitesse de référence du véhicule est égale à la vitesse circonférentielle des roues. Généralement, on calcule la vitesse de référence du véhicule comme la moyenne des vitesses circonférentielles des roues.

Or, en cas de blocage d'une roue, la valeur de la vitesse de la roue bloquée biaise le calcul de la vitesse de référence du véhicule. Il faut donc déterminer si la vitesse calculée par le calculateur est fiable ou non.

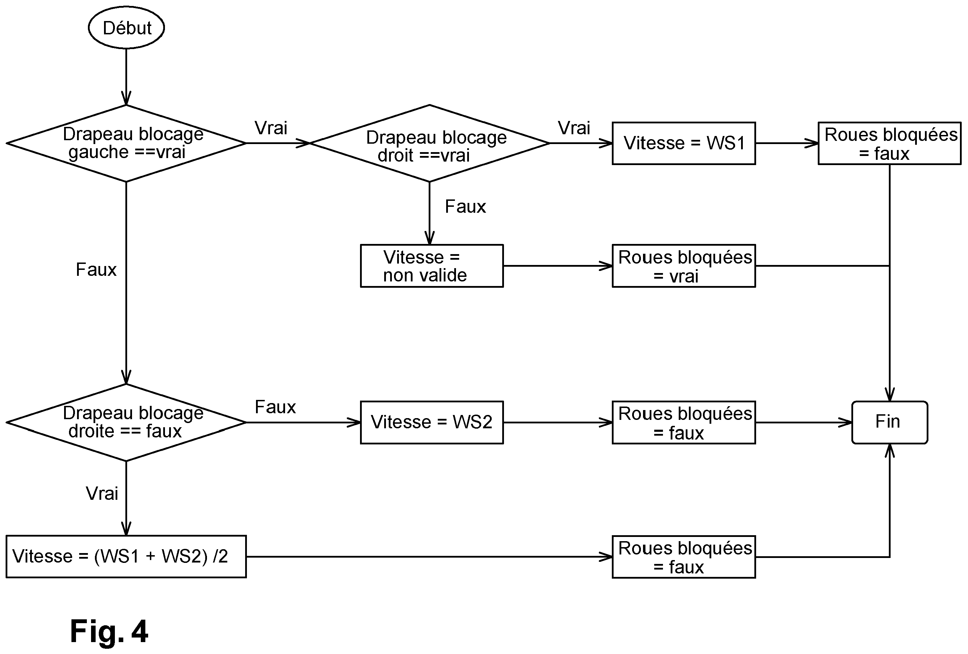

Pour ce faire, comme illustré à la [Fig.4], le calculateur se sert des résultats de la détermination du blocage d'une roue afin d'évaluer la fiabilité de la vitesse de référence du véhicule.

Le calculateur commence par constater si la roue gauche, conformément au procédé de détermination expliqué ci-dessus à la section "Détermination du blocage d'une roue", est bloquée ou non. Si oui, il évalue alors si la roue droite est bloquée ou non.

Si la roue droite est également bloquée alors la vitesse de référence du véhicule calculée n'est pas valide et il n'est pas possible de calculer de manière fiable cette vitesse à ce stade.

Si au contraire, la roue droite n'est pas bloquée, alors la vitesse de référence du véhicule est la vitesse circonférentielle de la roue droite. Autrement dit, la vitesse de référence du véhicule est la vitesse circonférentielle de la roue non bloquée.

Si, au début du procédé, le calculateur constate que la roue gauche n'est pas bloquée, il évalue alors si la roue droite est bloquée ou non.

Si la roue droite est bloquée, alors la vitesse de référence du véhicule est la vitesse circonférentielle de la roue gauche. Autrement dit, ici aussi, la vitesse de référence du véhicule est la vitesse circonférentielle de la roue non bloquée.

Si la roue droite n'est pas bloquée aucune des roues n'est bloqué et la vitesse de référence du véhicule calculée est fiable. Elle est calculée comme étant la moyenne des vitesses circonférentielles des roues gauche et droite.

Le calculateur peut commencer par vérifier si la roue gauche est bloquée comme expliqué précédemment mais il peut aussi débuter par la roue droite.

On remarque ici qu'au cours du procédé de détermination de la fiabilité du calcul de la vitesse de référence du véhicule, si l'une des deux roues n'est pas bloquée, le calculateur corrige le calcul au cours du procédé puisqu'il ne prend pas en compte la valeur de la vitesse de la roue bloquée. Ceci est un premier moyen de corriger le calcul de la vitesse de référence du véhicule.

**Correction du calcul de la vitesse de référence du véhicule**

L'invention prévoit différent moyen d'estimer la vitesse du véhicule afin de corriger la valeur calculée considérée comme non fiable.

Un premier moyen est de ne pas prendre en compte la valeur de la vitesse de la ou des roue(s) bloquée(s) comme vu précédemment.

Un second moyen de corriger le calcul de la vitesse de référence est d'interpoler une valeur de la vitesse de référence du véhicule sur la base des dernières valeurs fiables de cette vitesse.

L'idée de l'invention est que la vitesse de référence décélère de manière constante sur l'intervalle de temps prédéterminé entre deux mesures de la vitesse de référence. Ainsi, il est possible d'estimer la vitesse de référence grâce au gradient de celle-ci.

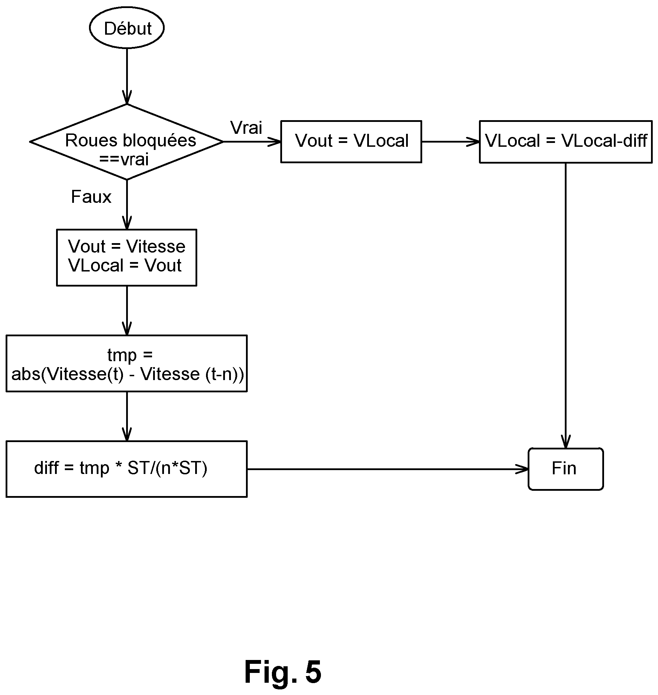

Comme illustré à la [Fig.5], si les roues ne sont pas bloquées (Are Wheels Locked == True ; False) on calcule le gradient par rapport au temps de la vitesse de référence par la formule suivante :

[Math.4]

$$gradient\ vitesse\ de\ r\acute{e}f\acute{e}rence = \frac{Vitesse\ de\ r\acute{e}f\acute{e}rence\ (t) - vitesse\ de\ r\acute{e}f\acute{e}rence\ (t-n)}{n}$$

Quand les deux roues sont bloquées, le calcul de la vitesse de référence n'est pas fiable comme expliqué ci-dessus à la section "Fiabilité du calcul de la vitesse de référence du véhicule". Ainsi, le calculateur utilise le gradient calculé lorsque les valeurs de la vitesse de référence étaient fiables et les utilise pour estimer une valeur de la vitesse de référence.

Comme expliqué plus haut, il suffit qu'une seule des roues ne soient pas bloquée pour considérer valablement que la vitesse de référence du véhicule est égale à la vitesse circonférentielle de cette roue non bloquée. Mais en variante, on considère que dès qu'une roue est bloquée, on corrige la valeur de la vitesse de référence du véhicule par interpolation et non en considérant uniquement la vitesse circonférentielle de la roue non bloquée.

Selon une variante, on combine ces deux moyens de correction en réalisation la moyenne des deux valeurs de corrections par exemple.

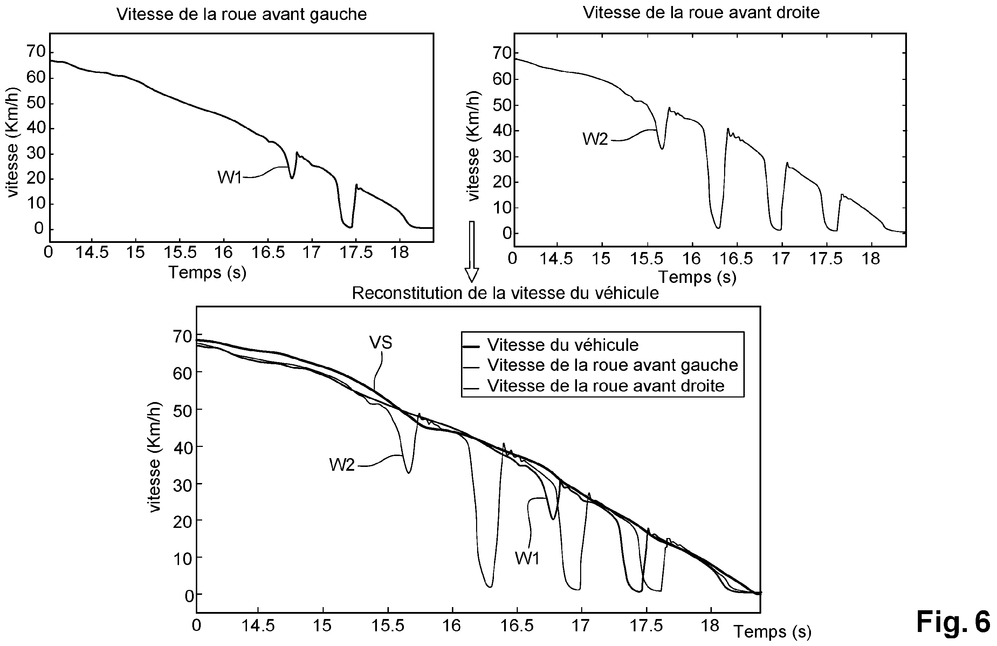

La [Fig.6] illustre la correction du calcul de la vitesse de référence. Même lorsque la roue gauche (W1) ou la roue droite (W2) est bloquée, le calculateur parvient à calculer valablement la vitesse de référence du véhicule (VS).

**Application au système ABS**

Lors d'un freinage d'urgence, si la pression de freinage sur une roue est trop forte compte tenu de l'adhérence de cette roue, la roue va se bloquer et entrainer le glissement du véhicule. Le système ABS détecte le blocage d'une roue comme expliqué à la section "Détermination du blocage d'une roue" et commande l'arrêt du freinage de cette roue.

Dès lors que la roue retrouve de l'adhérence, le système ABS commande la reprise du freinage afin que le véhicule décélère.

Par conséquent, le système régule la pression de freinage autour du point de blocage de la roue par une succession rapide de blocages/déblocages.

Pour évaluer le meilleur moment pour bloquer puis débloquer une roue, on calcule le taux de glissement SR de cette roue et on l'asservit grâce au système de régulation hydraulique de la pression de freinage afin que sa valeur reste bornée au sein d'une gamme prédéterminée au sein de laquelle le freinage est optimal.

Le taux de glissement SR est défini par la formule suivante :

[Math.5]

$$SR = \frac{Vitesse\ de\ r\acute{e}f\acute{e}rence\ du\ v\acute{e}hicule - Vitesse\ de\ la\ roue}{Vitesse\ de\ r\acute{e}f\acute{e}rence\ du\ v\acute{e}hicule}$$

Afin que le freinage soit optimal, on sait d'expérience qu'il faut que le taux de glissement SR de chaque roue soit compris entre 15% et 50%, de préférence entre 17% à 45%, de manière encore plus préférentielle entre 18% et 42%. Idéalement, le taux de glissement est égal à 18%.

Ainsi, à chaque instant, le calculateur du système ABS calcule le taux de glissement SR de chaque roue.

Si sa valeur dépasse 42%, le calculateur commande le déblocage de la roue. Autrement dit, si la valeur du taux de glissement SR de la roue dépasse 42% on commande l'arrêt du freinage de cette roue.

Ainsi, la vitesse de la roue augmente et le taux de glissement SR diminue et est de nouveau compris dans la gamme prédéterminée, par exemple une des gammes énoncées ci-dessus.

On peut alors de nouveau bloquer la roue pour freiner le véhicule de manière optimal.

A l'inverse, si la valeur du taux de glissement SR est inférieur à 15%, le calculateur commande le blocage de la roue. Autrement dit, si la valeur du taux de glissement SR de la roue est inférieur à 15%, on commande le freinage de cette roue.

On peut alors de nouveau bloquer la roue pour freiner le véhicule de manière optimal.

**Avantages de l'invention**

Par définition, quand la roue est bloquée, la vitesse de cette roue chute. C'est donc à ce moment précis que l'invention bénéficie au freinage du véhicule.

Au moment on la roue est bloquée, l'invention permet de calculer la vitesse du véhicule de manière fiable. Grâce à l'invention, la vitesse de référence du véhicule reste fiable malgré le blocage de la roue comme expliqué plus haut.

Lorsqu'une roue commence à être verrouillée (la vitesse de la roue commence soudainement à chuter), le calculateur détecte le blocage de la roue et la vitesse de référence du véhicule commence à être estimée.

Ainsi, pendant le blocage de la roue, le taux de glissement SR reste fiable et le moment pour débloquer la roue est calculé plus précisément.

Le freinage de la roue est donc amélioré puisque les alternances blocage/déblocage sont réalisées au meilleur moment.

De plus, l'invention ne nécessite pas l'utilisation de capteur d'inertie du véhicule. Ainsi, il est autonome face à un dysfonctionnement général du système électronique central du véhicule. Cela améliore la sécurité de l'utilisateur du véhicule.

Il est bien entendu que le calcul simultané sur les quatre roues d'un véhicule ne sort pas du cadre de la présente invention.

**Revendications**

1. Procédé pour calculer une vitesse, dite vitesse de référence (VS), d'un véhicule comprenant au moins deux roues (W1, W2) dans lequel :

a. on mesure les vitesses circonférentielles respectives (WS1, WS2) d'au moins deux roues (W1, W2) du véhicule,
b. on détermine si au moins une des roues (W1, W2) est bloquée,

- si au moins une des au moins deux roues (WS1, WS2) est bloquée et

au moins une des deux roues (WS1, WS2) n'est pas bloquée,
on calcule la vitesse (VS) du véhicule
sans utiliser la vitesse circonférentielle mesurée de la roue bloquée, d'après la formule suivante :

[Math 1]

$$VS = \frac{\sum_{i=1}^{n} WS_i}{n}$$

où $WS_i$ est la vitesse circonférentielle de la roue i non bloquée dont on a mesuré la vitesse circonférentielle à l'étape a, et où n est le nombre de roues non bloquées dont on a mesuré la vitesse circonférentielle à l'étape a,

- si aucune des au moins deux roues (W1, W2) n'est bloquée, on calcule la vitesse du véhicule (VS) en réalisant la moyenne arithmétique des vitesses circonférentielles des roues (W1, W2) ;
- si les au moins deux roues (W1, W2) sont bloquées,

on calcule la vitesse (VS) du véhicule
par extrapolation linéaire d'au moins deux vitesses (VS) antérieures connues du véhicule.

2. Procédé selon la revendication précédente dans lequel :

- on calcule un gradient des valeurs de la vitesse d'au moins une roue (W1, W2) à intervalle de temps régulier, et
- on détermine si cette roue (W1, W2) est bloquée grâce aux étapes suivantes :

• on compare la valeur absolue du gradient à un seuil prédéterminé :

- si la valeur est supérieure alors on considère que la roue (W1, W2) est bloquée et on déclenche un chronomètre,
- sinon, on considère que la roue (W1, W2) n'est pas bloquée,

• après une durée prédéterminée par rapport au déclenchement du chronomètre, on considère que la roue (W1, W2) n'est pas bloquée.

3. Procédé de freinage d'au moins une roue (W1, W2) d'un véhicule (V) dans lequel :

- on calcule un taux de glissement (SR) de la roue selon la formule suivante :

[Math 2]

$$SR = \frac{VS - WS}{VS}$$

où WS est la vitesse de la roue (W1, W2),
où VS est la vitesse du véhicule (V) et est calculée d'après le procédé de l'une quelconque des revendications 1 et 2, et

- on freine la roue (W1, W2) au moyen d'une commande d'un actionneur de freinage agissant sur ladite roue,

le taux de glissement (SR) étant asservi par la commande de l'actionneur selon une valeur de consigne prédéterminée du taux de glissement (SR).

**4.** Procédé selon la revendication précédente dans lequel la valeur de consigne est comprise entre 15% et 50%, de préférence entre 17% à 45%, de manière encore plus préférentielle entre 18% et 42% ou dans lequel la valeur de consigne est égale à 18%.

**5.** Procédé selon l'une quelconque des revendications 3 et 4 dans lequel :

- si le taux de glissement est inférieur à 18%, on commande l'actionneur de freinage pour freiner la roue, et
- si le taux de glissement est supérieur à 42%, on commande l'actionneur de freinage pour stopper le freinage de la roue.

**6.** Procédé selon l'une quelconque des revendications 3 à 5pour :

- maintenir constante la vitesse du véhicule, ou
- diminuer la vitesse du véhicule.

**7.** Système de freinage apte à mettre en œuvre l'un des procédés des revendications 1 à 6.

**8.** Véhicule comportant le système de freinage selon la revendication 7.

**Patentansprüche**

**1.** Verfahren zum Berechnen einer Geschwindigkeit, so genannte Referenzgeschwindigkeit (VS), eines Fahrzeugs, das mindestens zwei Räder (W1, W2) umfasst, bei dem:

a. die jeweiligen Umfangsgeschwindigkeiten (WS1, WS2) von mindestens zwei Rädern (W1, W2) des Fahrzeugs gemessen werden,
b. bestimmt wird, ob mindestens eines der Räder (W1, W2) blockiert ist,

- wenn mindestens eines der mindestens zwei Räder (W1, W2) blockiert ist und

mindestens eines der zwei Räder (W1, W2) nicht blockiert ist,
die Geschwindigkeit (VS) des Fahrzeugs berechnet wird,
ohne die gemessene Umfangsgeschwindigkeit des blockierten Rads zu verwenden, gemäß der folgenden Formel:

[Math 1]

$$VS = \frac{\sum_{i=1}^{n} WS_i}{n}$$

wobei $WS_i$ die Umfangsgeschwindigkeit des nicht blockierten Rads i ist, dessen Umfangsgeschwindigkeit in Schritt a gemessen wurde, und
wobei n die Anzahl nicht blockierter Räder ist, deren Umfangsgeschwindigkeit in Schritt a gemessen wurde,

- wenn keines der mindestens zwei Räder (W1, W2) blockiert ist, die Geschwindigkeit (VS) des Fahrzeugs berechnet wird, indem das arithmetische Mittel der Umfangsgeschwindigkeiten der Räder (W1, W2) genommen wird;
- wenn die mindestens zwei Räder (W1, W2) blockiert sind,

die Geschwindigkeit (VS) des Fahrzeugs berechnet wird
durch lineare Extrapolation von mindestens zwei bekannten früheren Geschwindigkeiten des Fahrzeugs.

**2.** Verfahren nach dem vorhergehenden Anspruch, bei dem:

- ein Gradient der Werte der Geschwindigkeit mindestens eines Rads (W1, W2) in regelmäßigen Zeitabständen berechnet wird und

EP 4 157 681 B1

- mit Hilfe der folgenden Schritte bestimmt wird, ob dieses Rad (W1, W2) blockiert ist:

  • der Absolutwert des Gradienten wird mit einem vorher festgelegten Schwellwert verglichen:

    - wenn der Wert höher ist, wird davon ausgegangen, dass das Rad (W1, W2) blockiert ist, und ein Zeitmesser wird gestartet,
    - andernfalls wird davon ausgegangen, dass das Rad (W1, W2) nicht blockiert ist,

  • nach einer vorher festgelegten Dauer in Bezug auf das Starten des Zeitmessers wird davon ausgegangen, dass das Rad (W1, W2) nicht blockiert ist.

3. Verfahren zum Abbremsen mindestens eines Rads (W1, W2) eines Fahrzeugs (V), bei dem:

   - eine Schlupfrate (SR) des Rads gemäß der folgenden Formel berechnet wird:

[Math 2]

$$SR = \frac{VS - WS}{VS}$$

   wobei WS die Geschwindigkeit des Rads (W1, W2) ist,
   wobei VS die Geschwindigkeit des Fahrzeugs (V) ist und gemäß dem Verfahren nach einem der Ansprüche 1 und 2 berechnet wird, und

   - das Rad (W1, W2) mittels einer Betätigung eines Bremsaktuators, der auf das Rad einwirkt, abgebremst wird,

   wobei die Schlupfrate (SR) durch die Betätigung des Bremsaktuators gemäß einem vorher festgelegten Sollwert der Schlupfrate (SR) geregelt wird.

4. Verfahren nach dem vorhergehenden Anspruch, bei dem der Sollwert zwischen 15 % und 50 %, bevorzugt zwischen 17 % und 45 %, weiter bevorzugt zwischen 18 % und 42 % beträgt oder bei dem der Sollwert gleich 18 % ist.

5. Verfahren nach einem der Ansprüche 3 und 4, bei dem:

   - wenn die Schlupfrate weniger als 18 % beträgt, der Bremsaktuator so betätigt wird, dass er das Rad abbremst, und
   - wenn die Schlupfrate mehr als 42 % beträgt, der Bremsaktuator so betätigt wird, dass er das Abbremsen des Rads stoppt.

6. Verfahren nach einem der Ansprüche 3 bis 5, um:

   - die Geschwindigkeit des Fahrzeugs konstant zu halten oder
   - die Geschwindigkeit des Fahrzeugs zu verringern.

7. Bremssystem, geeignet zur Durchführung eines der Verfahren der Ansprüche 1 bis 6.

8. Fahrzeug, aufweisend das Bremssystem nach Anspruch 7.


Claims

1. Method for calculating a speed, known as the reference speed (VS), of a vehicle comprising at least two wheels (W1, W2), in which:

   a. the respective circumferential speeds (WS1, WS2) of at least two wheels (W1, W2) of the vehicle are measured,
   b. it is determined whether at least one of the wheels (W1, W2) is locked,

9

- if at least one of the at least two wheels (WS1, WS2) is locked and

at least one of the two wheels (WS1, WS2) is not locked,
the speed (VS) of the vehicle is calculated
without using the measured circumferential speed of the locked wheel, according to the following formula:

[Math 1]

$$VS = \frac{\sum_{i=1}^{n} WS_i}{n}$$

where $WS_i$ is the circumferential speed of the unblocked wheel i whose circumferential speed was measured in step a, and
where n is the number of unblocked wheels whose circumferential speed was measured in step a,

- if none of the at least two wheels (W1, W2) is locked, the vehicle speed (VS) is calculated by taking the arithmetic mean of the circumferential speeds of the wheels (W1, W2);
- if the at least two wheels (W1, W2) are locked,

the speed (VS) of the vehicle is calculated
by linear extrapolation of at least two known previous speeds (VS) of the vehicle.

2. Method according to the previous claim, in which:

- a gradient of the speed values of at least one wheel (W1, W2) is calculated at regular time intervals, and
- it is determined whether this wheel (W1, W2) is locked using the following steps:

• the absolute value of the gradient is compared to a predetermined threshold:

- if the value is greater, then the wheel (W1, W2) is considered to be locked and a timer is started,
- otherwise, the wheel (W1, W2) is considered not to be locked,

• after a predetermined period of time from when the timer was started, the wheel (W1, W2) is considered not to be locked.

3. Method for braking at least one wheel (W1, W2) of a vehicle (V) in which:

- a slip ratio (SR) of the wheel is calculated according to the following formula:

[Math 2]

$$SR = \frac{VS - WS}{VS}$$

where WS is the speed of the wheel (W1, W2),
where VS is the speed of the vehicle (V) and is calculated according to the method of any one of claims 1 and 2, and

- the wheel (W1, W2) is braked by means of a control of a brake actuator acting on said wheel,

the slip ratio (SR) being controlled by the actuator control according to a predetermined slip ratio (SR) setpoint.

4. Method according to the previous claim, wherein the setpoint value is between 15% and 50%, preferably between 17% and 45%, more preferably between 18% and 42%, or wherein the setpoint value is equal to 18%.

5. Method according to any of claims 3 and 4, wherein:

- if the slip ratio is less than 18%, the brake actuator is controlled to brake the wheel, and
- if the slip ratio is greater than 42%, the brake actuator is controlled to stop braking the wheel.

6. Method according to any of claims 3 to 5 for:

- maintaining the speed of the vehicle constant, or
- reduce the speed of the vehicle.

7. Braking system capable of implementing one of the methods of claims 1 to 6.

8. Vehicle comprising the braking system according to claim 7.

# Fig. 1

# Fig. 2

**Fig. 3**

**Fig. 4**

Début

Roues bloquées ==vrai

Vrai

Vout = VLocal

VLocal = VLocal-diff

Faux

Vout = Vitesse
VLocal = Vout

tmp =
abs(Vitesse(t) - Vitesse (t-n))

diff = tmp * ST/(n*ST)

Fin

# Fig. 5

Fig. 6

**RÉFÉRENCES CITÉES DANS LA DESCRIPTION**

**Documents brevets cités dans la description**

- WO 2009060093 A1
- FR 2871889 A1